# FASCICULE DE BREVET EUROPEEN

(11) **EP 2 715 091 B1**
(45) Date de publication et mention de la délivrance du brevet: **17.07.2019**
(21) Numéro de dépôt: 12731094.4
(22) Date de dépôt: 31.05.2012
(51) Int. Cl.: F02C 3/067, F02K 3/06, F02K 3/072

(54) **MOTEUR À TURBINE À GAZ AVEC ARRANGEMENT SPÉCIFIQUE DE TROIS CORPS ROTATIFS**
GASTURBINENMOTOR MIT SPEZIFISCHER ANORDNUNG VON DREI ROTIERENDEN KÖRPERN
GAS TURBINE ENGINE WITH SPECIFIC ARRANGMENT OF THREE ROTATING BODIES

(30) Priorité: 31.05.2011 FR 1154729
(43) Date de publication de la demande: 09.04.2014
(73) Titulaire: Safran Aircraft Engines, 75015 Paris (FR)
(72) Inventeur: CHANEZ, Philippe, 77550 Moissy-cramayel Cedex (FR); M'BENGUE, Lamine, 77550 Moissy-cramayel Cedex (FR)
(74) Mandataire: Gevers & Orès
(86) Numéro de dépôt international: PCT/FR2012/051218
(87) Numéro de publication internationale: WO 2012/164228

(56) Documents cités:
- EP-A1- 1 577 491
- GB-A- 2 408 072
- US-A- 3 903 690

## Description

La présente invention concerne le domaine des moteurs à turbine à gaz pour la propulsion d'un aéronef.

Par la suite, les termes « amont » et « aval » sont définis par rapport au sens de circulation du flux d'air dans le moteur. De manière classique, un moteur à turbine à gaz comporte, d'amont en aval, un compresseur basse pression, un compresseur haute pression, une chambre de combustion, une turbine haute pression et une turbine basse pression. A cet effet, le moteur comporte un corps basse pression supportant des aubes mobiles de compresseur et de turbine et un corps haute pression supportant des aubes mobiles de compresseur et de turbine. Le compresseur basse pression comporte de manière connue en amont des aubes mobiles de grandes dimensions connues de l'homme du métier sous la désignation « soufflante » ou « fan ».

Un des moyens pour limiter la consommation en carburant du moteur est de diminuer la vitesse de rotation des aubes de soufflante afin d'augmenter le taux de dilution du moteur, c'est-à-dire, le rapport entre la masse d'air du flux froid (masse d'air déplacé par la soufflante et ne traversant pas la chambre de combustion) et la masse d'air du flux chaud (masse d'air traversant la chambre de combustion). Comme indiqué précédemment, les aubes de soufflante et les aubes mobiles de turbine basse pression sont solidaires du corps basse pression du moteur. Dès lors, une diminution de la vitesse des aubes de soufflante entraîne une diminution de la vitesse des aubes de turbine basse pression. Une telle solution affecte les performances de la turbine du moteur ce qui n'est pas souhaitable. Afin d'éliminer cet inconvénient, il a été proposé de découpler la rotation des aubes de soufflante de la rotation des aubes de turbine basse pression de manière à ce que leurs vitesses de rotation soient différentes.

Une première solution de découplage consiste à prévoir un réducteur de couple entre la turbine basse pression et la soufflante. Sans parler de sa masse élevée, un réducteur de couple doit dissiper une énergie thermique importante ce qui peut présenter des inconvénients en termes de fiabilité.

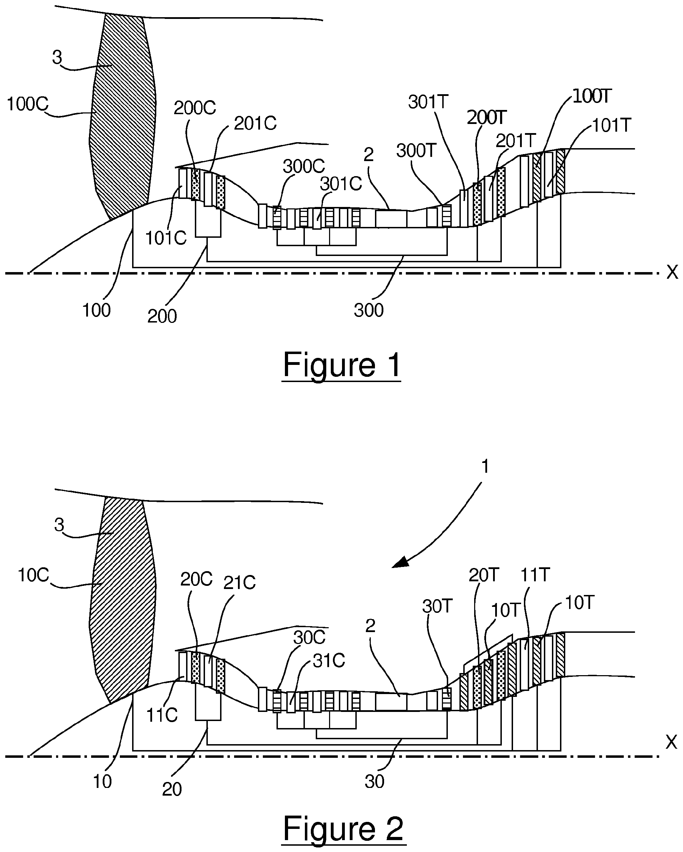

Une deuxième solution de découplage consiste à prévoir, en outre des corps basse et haute pression, un corps intermédiaire qui permet de rendre indépendant la vitesse des aubes de soufflante, qui sont solidaires du corps basse pression, de la vitesse des aubes mobiles de turbine basse pression, qui sont solidaires du corps intermédiaire. Par définition, un corps comporte un arbre sur lequel sont montées des aubes mobiles de compresseur et des aubes mobiles de turbine. Chaque aube mobile d'un corps est associée dans le moteur à une aube de stator, montée en amont de ladite aube mobile, dont la fonction est de redresser le flux d'air qui a été dévié par l'aube mobile. Comme représenté sur la figure 1, un moteur à triple corps comporte, de manière connue, un corps rotatif basse pression 100, un corps rotatif intermédiaire 200 et un corps rotatif haute pression 300 qui comportent respectivement des aubes mobiles de compresseur 100C, 200C, 300C associées à des aubes de stator de compresseur 101C, 201C, 301C et des aubes mobiles de turbine 100T, 200T, 300T associées à des aubes de stator de turbine 101T, 201T, 301T. Un tel moteur possède une masse importante et est très long ce qui présente des inconvénients en termes d'encombrement et de masse ce qui limite les économies de carburant.

Afin d'éliminer au moins certains de ces inconvénients, l'invention concerne un moteur à turbine à gaz permettant un découplage de la soufflante et de la turbine basse pression dont la masse et l'encombrement sont réduits.

Les documents US3903690 et GB2408072 divulguent des moteurs à turbine à gaz comprenant trois corps rotatifs, et dont le nombre d'aubes statoriques est réduit ou nul.

A cet effet, l'invention concerne un moteur à turbine à gaz pour la propulsion d'un aéronef selon la revendication 1. Ledit moteur comporte notamment un corps basse pression comportant des aubes mobiles de turbine basse pression, un corps intermédiaire comportant des aubes mobiles de turbine intermédiaire, un corps haute pression comportant des aubes mobiles de turbine haute pression, un flux d'air circulant dans le moteur d'amont vers l'aval, moteur dans lequel chaque aube mobile de turbine intermédiaire est suivie directement en aval d'une aube mobile de turbine basse pression de manière à redresser le flux d'air dévié par l'aube mobile de turbine intermédiaire.

De manière avantageuse, le moteur à triple corps selon l'invention ne comporte pas ou très peu d'aubes de stator de turbine intermédiaire pour redresser le flux d'air dévié par une aube mobile de turbine intermédiaire. En effet, c'est une aube mobile de turbine basse pression qui redresse le flux d'air dévié. Le nombre d'aubes de stator de turbine intermédiaire étant limité, la longueur du moteur ainsi que sa masse sont limitées ce qui est très avantageux. Un moteur selon l'invention bénéficie en outre de tous les avantages d'un moteur classique à triple corps. La vitesse des aubes mobiles de turbine basse pression (telles que les aubes de soufflante) est indépendante de la vitesse des aubes mobiles de turbine intermédiaire solidaires du corps intermédiaire. On peut ainsi avantageusement réduire la vitesse de la soufflante sans affecter les performances de la turbine du moteur.

De manière préférée, le corps basse pression et le corps intermédiaire sont contrarotatifs. Ainsi, la vitesse relative entre une aube mobile de turbine intermédiaire et une aube mobile de turbine basse pression est élevée et ce, même pour des corps entraînés en rotation à des vitesses réduites. Une vitesse relative importante améliore le redressement du flux d'air ce qui est très avantageux. En effet, des aubes mobiles contrarotatives à basses vitesses remplissent avantageusement la même fonction qu'une aube mobile à haute vitesse associée à une aube de stator qui est, par définition, immobile.

Selon l'invention, au moins une aube mobile de turbine haute pression est suivie directement en aval d'une aube mobile de turbine intermédiaire de manière à redresser le flux d'air dévié par l'aube mobile de turbine haute pression.

De manière avantageuse, cela permet de limiter le nombre d'aubes de stator de turbine haute pression pour redresser le flux d'air dévié par une aube mobile de turbine haute pression. En effet, c'est une aube mobile de turbine intermédiaire qui redresse le flux d'air dévié. Le nombre d'aubes de stator de turbine haute pression étant limité, la longueur ainsi que la masse du moteur sont réduites ce qui est très avantageux

De préférence, le corps haute pression et le corps intermédiaire sont contrarotatifs. La vitesse relative entre une aube mobile de turbine intermédiaire et une aube mobile de turbine haute pression est élevée ce qui améliore le redressement du flux d'air.

Selon un aspect de l'invention, l'aube mobile de turbine basse pression s'étendant radialement dans un sens donné, l'aube mobile de turbine intermédiaire s'étend radialement dans le sens opposé. Lorsque les aubes mobiles de turbine intermédiaire sont orientées radialement vers l'intérieur, les aubes mobiles de turbine basse pression sont orientées radialement vers l'extérieur. De manière similaire, lorsque les aubes mobiles de turbine intermédiaire sont orientées radialement vers l'extérieur, les aubes mobiles de turbine basse pression sont orientées radialement vers l'intérieur. Grâce à cette orientation des aubes, on forme une turbine très compacte ce qui est avantageux. En outre, on améliore le redressement du flux d'air dévié en plaçant les aubes mobiles proches les unes des autres.

Selon l'invention, chaque aube mobile de turbine intermédiaire est suivie directement en aval d'une aube mobile de turbine basse pression de manière à redresser le flux d'air dévié par l'aube mobile de turbine intermédiaire. En d'autres termes, le moteur selon l'invention ne comporte aucune aube de stator de turbine intermédiaire ce qui permet de limiter de manière importante la longueur ainsi que la masse du moteur.

De préférence, ladite aube mobile de turbine basse pression est suivie directement en aval d'une autre aube mobile de turbine intermédiaire de manière à redresser le flux d'air dévié par ladite aube mobile de turbine basse pression. Ainsi, la turbine comporte une alternance d'aubes mobiles de turbine intermédiaire et d'aubes mobiles de turbine basse pression ce qui permet de former un moteur compact.

Selon un premier aspect, une pluralité d'aubes mobiles de turbine basse pression est suivie directement en aval d'une aube mobile de turbine intermédiaire de manière à redresser le flux d'air dévié par la pluralité d'aubes mobiles de turbine basse pression. Grâce à l'invention, l'encombrement et la masse du turbomoteur sont optimisés.

Selon un deuxième aspect, au moins une aube mobile de turbine basse pression est suivie directement en aval par une aube de stator de turbine basse pression de manière à redresser le flux d'air dévié par l'aube mobile de turbine basse pression. Une aube de stator de turbine basse pression permet avantageusement de calibrer la charge de la turbine du moteur pour entraîner les aubes de soufflante solidaires du corps basse pression.

Ainsi, en ajoutant parmi les aubes mobiles de turbines basse pression une ou plusieurs aubes de stator de turbine basse pression, on peut ajuster la charge de la turbine ainsi que sa vitesse de manière à obtenir le taux de dilution souhaité, la plage de variation du taux de dilution pouvant être importante.

L'invention sera mieux comprise à la lecture de la description qui va suivre, donnée uniquement à titre d'exemple, et se référant aux dessins annexés sur lesquels :
- la figure 1 est une représentation schématique d'un moteur à turbine à gaz à triple corps selon l'art antérieur ;
- la figure 2 est une représentation schématique d'un moteur à turbine à gaz à triple corps selon l'invention ;
- la figure 3A est une représentation schématique d'une première forme de réalisation d'un moteur à turbine à gaz à triple corps selon l'invention ;
- la figure 3B est une représentation schématique d'une deuxième forme de réalisation d'un moteur à turbine à gaz à triple corps selon l'invention ;
- la figure 3C est une représentation schématique d'une troisième forme de réalisation d'un moteur à turbine à gaz à triple corps selon l'invention ;
- la figure 3D est une représentation schématique d'une quatrième forme de réalisation d'un moteur à turbine à gaz à triple corps selon l'invention ; et
- les figures 4A-4D sont respectivement des représentations schématiques d'alternatives des formes de réalisation des figures 3A-3D avec une aube de stator de turbine basse pression.

Il faut noter que les figures exposent l'invention de manière détaillée pour mettre en oeuvre l'invention, lesdites figures pouvant bien entendu servir à mieux définir l'invention le cas échéant.

Comme représenté sur la figure 2, un turbomoteur 1 d'axe X comporte plusieurs étages de compresseur pour compresser un flux d'air axialement de l'amont vers l'aval, une chambre de combustion 2 et plusieurs étages de turbine pour récupérer l'énergie de la combustion. Le turbomoteur 1 comporte un corps rotatif basse pression 10, un corps rotatif intermédiaire 20 et un corps rotatif haute pression 30 qui comportent respectivement des aubes mobiles de compresseur 10C, 20C, 30C et des aubes mobiles de turbine 10T, 20T, 30T. Parmi les aubes de compresseur basse pression 10C, le turbocompresseur 1 comporte des aubes de soufflante amont 3 de grandes dimensions. Chaque corps est formé d'un arbre sur lequel sont montées radialement les aubes mobiles de compresseur et les aubes mobiles de turbine. Ainsi, les aubes mobiles de compresseur et les aubes mobiles de turbine d'un même corps sont entraînées à la même vitesse de rotation. Les corps 10, 20, 30 sont coaxiaux à l'axe X du moteur 1.

Comme expliqué précédemment, un turbomoteur à triple corps permet de rendre indépendant la vitesse des aubes mobiles de compresseur basse pression 10C (dont les aubes de soufflante 3), qui sont solidaires du corps basse pression 10, de la vitesse des aubes de turbine intermédiaire 20T, qui sont solidaires du corps intermédiaire 20.

Toujours en référence à la figure 2, les aubes mobiles de compresseur basse pression 10C sont associées à des aubes de stator basse pression 11C, les aubes mobiles de compresseur intermédiaire 20C sont associées à des aubes de stator de compresseur intermédiaire 21C et les aubes mobiles de compresseur haute pression 30C sont associées à des aubes de stator de compresseur haute pression 31C afin de comprimer le flux d'air d'amont en aval jusqu'à la chambre de combustion 2.

L'invention vise plus particulièrement la turbine du turbocompresseur 1 et plus particulièrement les étages de faibles pressions de ladite turbine (étage de turbine basse pression et étage de turbine intermédiaire). Contrairement à un turbomoteur à triple corps classique, chaque aube mobile de turbine intermédiaire 20T n'est pas suivie directement en aval d'une aube de stator, le flux d'air dévié étant redressé directement par une aube mobile de turbine basse pression 10T.

Le turbomoteur 1 comporte au moins une aube mobile de turbine intermédiaire 20T suivie directement en aval d'une aube mobile de turbine basse pression 10T de manière à redresser le flux d'air dévié par l'aube mobile de turbine intermédiaire 20T comme représenté sur la figure 2. Ainsi, le flux d'air dévié par une aube mobile de turbine intermédiaire 20T n'est pas redressé par une aube de stator fixe mais par une aube mobile de turbine basse pression 10T. Le nombre d'aubes de stator est avantageusement limité ce qui permet de réduire la longueur du turbomoteur 1.

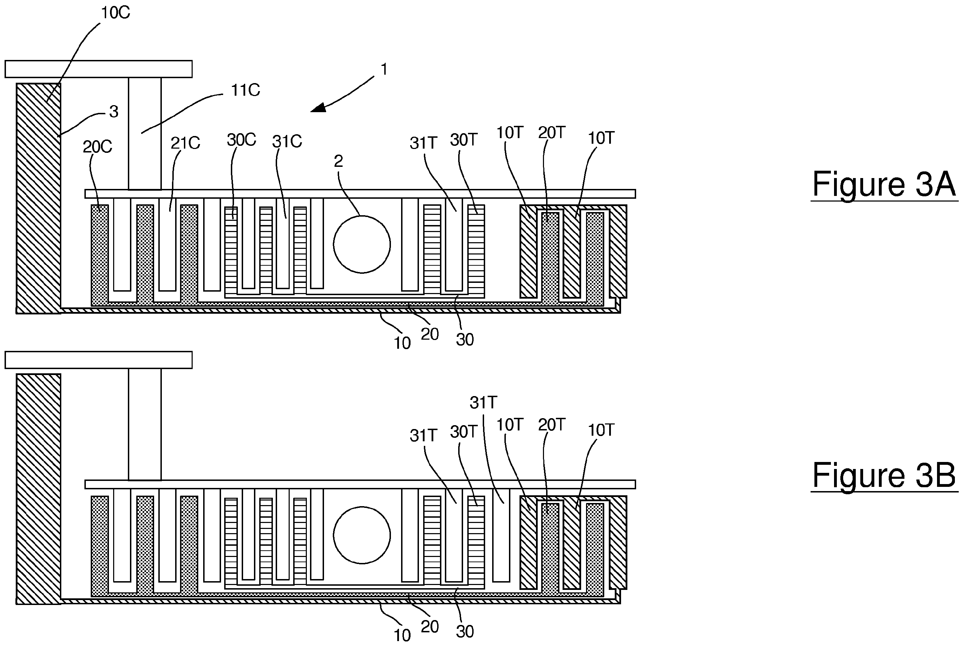

Selon un premier exemple qui ne fait pas partie de l'invention, comme représenté sur les figures 2 et 3A, la turbine haute pression est classique et comporte des aubes mobiles de turbine haute pression 30T associées chacune à une aube de stator de turbine haute pression 31T. Le corps intermédiaire 20 comporte, dans cet exemple, deux aubes mobiles de turbine intermédiaire 20T tandis que le corps basse pression 10 comporte trois aubes mobiles de turbine basse pression 10T qui sont alternées de manière à ce que le flux d'air issu de la turbine haute pression soit, tout d'abord, redressé par une aube mobile de turbine basse pression 10T, directement dévié par une aube mobile de turbine intermédiaire 20T, redressé par une autre aube mobile de turbine basse pression 10T et ainsi de suite.

Comme indiqué précédemment, le corps intermédiaire 20 et le corps basse pression 10 sont contrarotatifs de manière à optimiser la charge de la turbine ainsi que le redressement du flux d'air d'amont en aval. La vitesse relative entre une aube mobile de turbine intermédiaire 20T et une aube mobile de turbine basse pression 10T est élevée et ce, même pour des corps entraînés en rotation à des vitesses réduites. Une vitesse relative importante améliore le redressement du flux d'air ce qui est très avantageux.

Par la suite, les termes « intérieur » et « extérieur » sont définis par rapport à l'axe du moteur X. Une aube radiale s'étend vers l'intérieur lorsqu'elle s'étend vers l'axe du moteur, c'est-à-dire lorsque la tête de l'aube (c'est à dire son extrémité libre) est plus proche de l'axe du moteur que le pied de l'aube. De manière similaire, une aube radiale s'étend vers l'extérieur lorsqu'elle s'étend dans un sens opposé à l'axe du moteur, c'est-à-dire lorsque la tête de l'aube est plus proche de l'axe du moteur X que le pied de l'aube

Dans l'exemple représenté aux figures 2 et 3A, les aubes mobiles de turbine intermédiaire 20T s'étendent radialement vers l'extérieur tandis que les aubes mobiles de turbine basse pression 10T s'étendent radialement vers l'intérieur de manière à former un exosquelette coopérant avec les aubes mobiles de turbine intermédiaire 20T comme représenté sur la figure 3A. Un tel agencement des aubes permet de limiter l'encombrement du moteur.

Dans cet exemple, le flux d'air dévié par l'aube mobile de turbine haute pression 30T située la plus en aval est directement redressé par une aube mobile de turbine basse pression 10T ce qui permet d'éviter l'utilisation d'une aube de stator et ainsi limite l'encombrement du moteur.

Un deuxième exemple qui ne fait pas partie de l'invention est identique au premier exemple à la seule différence que la turbine du turbomoteur de la deuxième forme de réalisation comporte une aube de stator de turbine haute pression 31T placée directement entre une aube mobile haute pression 30T et une aube mobile de turbine basse pression 10T comme représenté sur la figure 3B. Une telle aube de stator de turbine haute pression 31T permet avantageusement de réguler la charge entre les différents corps et/ou d'améliorer rendement global. Une telle aube de stator peut, par exemple, modifier la giration en sortie de turbine haute pression pour charger plus ou moins la turbine basse pression. Cela peut également améliorer le rendement global du moteur en limitant les phénomènes secondaires (tourbillons, etc.) en sortie de turbine haute pression qui diminuent le rendement de la turbine basse pression située en aval.

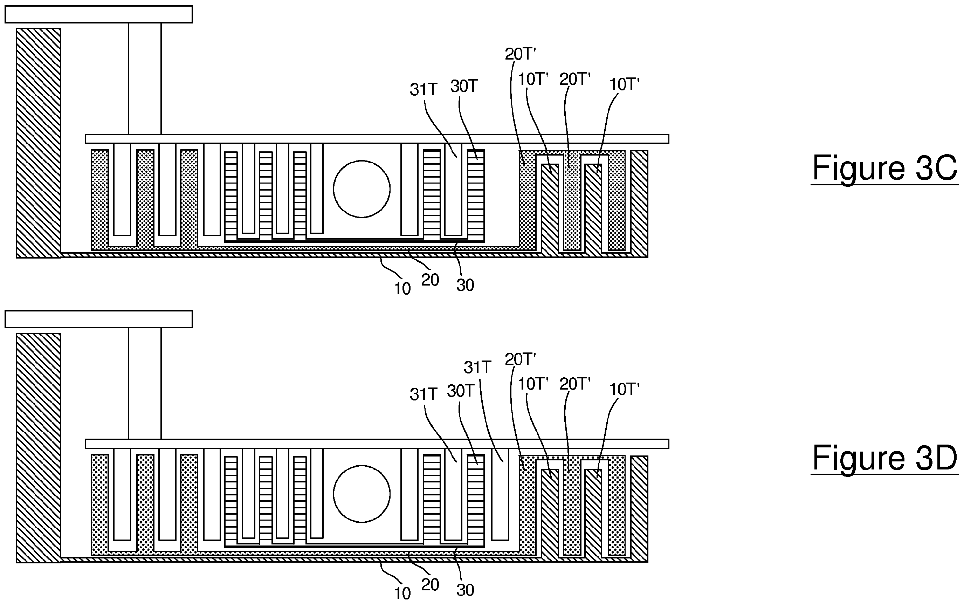

Une forme de réalisation de l'invention est similaire au premier exemple à la différence que les aubes mobiles de turbine basse pression 10T' s'étendent radialement vers l'extérieur tandis que les aubes mobiles de turbine intermédiaire 20T' s'étendent radialement vers l'intérieur de manière à former un exosquelette coopérant avec les aubes mobiles de turbine basse pression 10T' comme représenté sur la figure 3C.

L'orientation intérieure ou extérieure des aubes mobiles de turbine basse pression et des aubes mobiles de turbine intermédiaire est donc indifférente, l'important étant qu'elles soient orientées dans des sens opposés. De plus, les aubes mobiles de turbine basse pression et les aubes mobiles de turbine intermédiaire sont alternées et contrarotatives pour permettre un redressement optimal du flux d'air lors de sa circulation dans la turbine du moteur.

De manière similaire au premier exemple, le flux d'air issu dévié par l'aube mobile de turbine haute pression 30T du moteur selon l'invention est directement redressé par une aube mobile de turbine intermédiaire 20T' ce qui permet d'éviter l'utilisation d'une aube de stator et ainsi limite l'encombrement du moteur.

Un autre exemple qui ne fait pas partie de l'invention est similaire à l'invention à la seule différence que la turbine du turbomoteur cet exemple comporte une aube de stator haute pression 31T directement entre une aube mobile haute pression 30T' et une aube mobile de turbine intermédiaire 20T' comme représenté sur la figure 3D. Une telle aube de stator haute pression 31T permet avantageusement de réguler la charge entre les différents corps et/ou d'améliorer rendement global. Elle agit plus particulièrement sur la charge et le rendement de la turbine du corps intermédiaire.

Sur les figures 3A-3D, les aubes mobiles de turbine intermédiaire et les aubes mobiles de turbine basse pression sont alternées et contrarotatives pour redresser le flux d'air circulant dans la turbine, aucune aube de stator de turbine basse pression ou aube de stator de turbine intermédiaire n'étant montée dans la turbine afin de limiter de manière optimale l'encombrement et la masse du moteur.

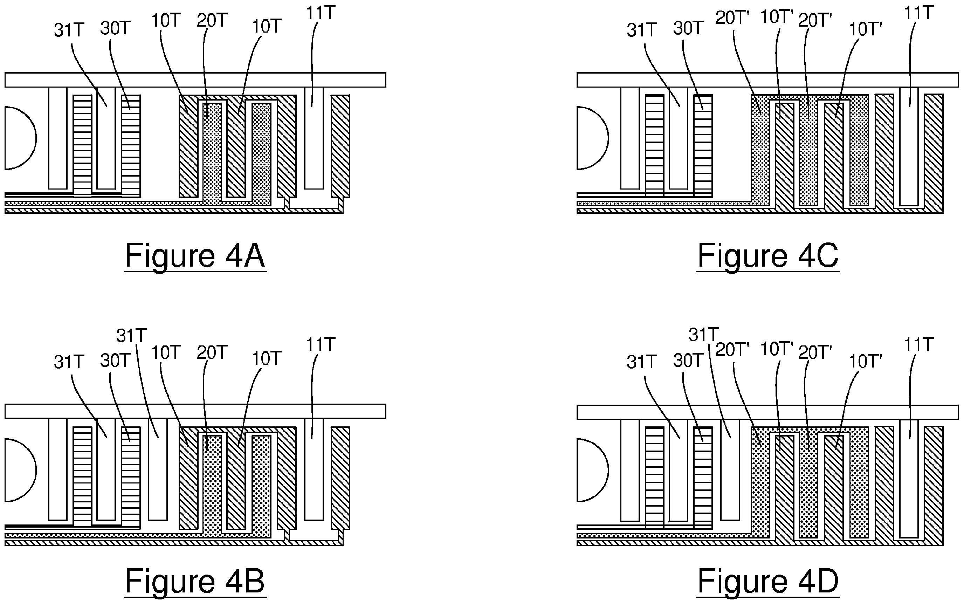

A titre d'alternative, la turbine du moteur 1 peut comporter une ou plusieurs aubes de stator basse pression 11T placées directement entre deux aubes mobiles de turbine basse pression 10T, 10T' comme représentées sur les figures 4A-4D illustrant respectivement les configurations illustrées aux figures 3A-3D. Par analogie, l'invention est représentée à la figure 4C. Le nombre d'aubes de stator basse pression 11T permet avantageusement de paramétrer la charge désirée de la turbine basse pression et donc de la soufflante solidaire du corps basse pression 30.

Ainsi, en ajoutant une ou plusieurs aubes de stator basse pression 11T, on peut calibrer la vitesse et la charge de la turbine de manière à calibrer précisément le taux de dilution du moteur.

Grâce à l'invention, on peut bénéficier de tous les avantages d'un turbomoteur classique à triple corps tout en limitant la longueur et la masse du moteur. De telles optimisations permettent avantageusement de réduire la consommation de carburant du moteur.

## Revendications

1. Moteur à turbine à gaz pour la propulsion d'un aéronef comportant un corps basse pression (10) comportant des aubes mobiles de turbine basse pression (10T, 10T'), un corps intermédiaire (20) comportant des aubes mobiles de turbine intermédiaire (20T, 20T'), un corps haute pression (30) comportant des aubes mobiles de turbine haute pression (30T), un flux d'air circulant dans le moteur d'amont vers l'aval, moteur dans lequel au moins une aube mobile de turbine haute pression (30T) est suivie directement en aval d'une aube mobile de turbine intermédiaire (20T, 20T') de manière à redresser le flux d'air dévié par l'aube mobile de turbine haut pression (30T) **caractérisé en ce que** chaque aube mobile de turbine intermédiaire (20T, 20T') est suivie directement en aval d'une aube mobile de turbine basse pression (10T, 10T') de manière à redresser le flux d'air dévié par l'aube mobile de turbine intermédiaire (20T, 20T').

2. Moteur selon la revendication 1, dans lequel le corps basse pression (10) et le corps intermédiaire (20) sont contrarotatifs.

3. Moteur selon l'une des revendications 1 à 2, dans lequel le corps haute pression (30) et le corps intermédiaire (20) sont contrarotatifs.

4. Moteur selon l'une des revendications 1 à 3, dans lequel l'aube mobile de turbine basse pression (10T, 10T') s'étendant radialement dans un sens donné, l'aube mobile de turbine intermédiaire (20T, 20T') s'étend radialement dans le sens opposé.

5. Moteur selon l'une des revendications 1 à 4, dans lequel au moins une aube mobile de turbine basse pression (10T, 10T') est suivie directement en aval d'une autre aube mobile de turbine intermédiaire (20T, 20T') de manière à redresser le flux d'air dévié par ladite aube mobile de turbine basse pression (10T, 10T').

6. Moteur selon l'une des revendications 1 à 5, dans lequel une pluralité d'aubes mobiles de turbine base pression (10T, 10T') est suivie directement en aval d'une aube mobile de turbine intermédiaire (20T, 20T') de manière à redresser le flux d'air dévié par la pluralité d'aubes mobiles de turbine basse pression (10T, 10T').

7. Moteur selon l'une des revendications 1 à 6, dans lequel au moins une aube mobile de turbine basse pression (10T, 10T') est suivie directement en aval par une aube de stator de turbine basse pression (11T) de manière à redresser le flux d'air dévié par l'aube mobile de turbine basse pression (10T, 10T').

## Patentansprüche

1. Gasturbinenmotor für den Antrieb einen Flugzeugs, umfassend einen Niederdruckkörper (10), der bewegliche Niederdruckturbinenschaufeln (10T, 10T') umfasst, einen Zwischenkörper (20), der bewegliche Zwischenturbinenschaufeln (20T, 20T') umfasst, einen Hochdruckkörper (30), der bewegliche Hochdruckturbinenschaufeln (30T) umfasst, wobei ein Luftstrom im Motor von stromaufwärts nach stromabwärts strömt, Motor, in dem mindestens einer bewegliche Hochdruckturbinenschaufel (30T) unmittelbar stromabwärts eine bewegliche Zwischenturbinenschaufel (20T, 20T') folgt, um den von der beweglichen Hochdruckturbinenschaufel (30T) abgelenkten Luftstrom zu begradigen, **dadurch gekennzeichnet, dass** jeder beweglichen Zwischenturbinenschaufel (20T, 20T') unmittelbar stromabwärts eine bewegliche Niederdruckturbinenschaufel (10T, 10T') folgt, um den von der beweglichen Zwischenturbinenschaufel (20T, 20T') abgelenkten Luftstrom zu begradigen.

2. Motor nach Anspruch 1, wobei der Niederdruckkörper (10) und der Zwischenkörper (20) gegenläufig drehen.

3. Motor nach einem der Ansprüche 1 bis 2, wobei der Hochdruckkörper (30) und der Zwischenkörper (20) gegenläufig drehen.

4. Motor nach einem der Ansprüche 1 bis 3, wobei, wenn sich die bewegliche Niederdruckturbinenschaufel (10T, 10T') radial in eine gegebene Richtung erstreckt, sich die bewegliche Zwischenturbinenschaufel (20T, 20T') radial in die entgegengesetzte Richtung erstreckt.

5. Motor nach einem der Ansprüche 1 bis 4, wobei mindestens einer beweglichen Niederdruckturbinenschaufel (10T, 10T') unmittelbar stromabwärts eine weitere bewegliche Zwischenturbinenschaufel (20T, 20T') folgt, um den von der beweglichen Niederdruckturbinenschaufel (10T, 10T') abgelenkten Luftstrom zu begradigen.

6. Motor nach einem der Ansprüche 1 bis 5, wobei einer Vielzahl von beweglichen Niederdruckturbinenschaufeln (10T, 10T') unmittelbar stromabwärts eine bewegliche Zwischenturbinenschaufel (20T, 20T') folgt, um den von der Vielzahl von beweglichen Niederdruckturbinenschaufeln (10T, 10T') abgelenkten Luftstrom zu begradigen.

7. Motor nach einem der Ansprüche 1 bis 6, wobei mindestens einer beweglichen Niederdruckturbinenschaufel (10T, 10T') unmittelbar stromabwärts eine Niederdruckturbinenstatorschaufel (11T) folgt, um den von der beweglichen Niederdruckturbinenschaufel (10T, 10T') abgelenkten Luftstrom zu begradigen.

## Claims

1. Gas turbine engine for propelling an aircraft comprising a low-pressure body (10) comprising low-pressure turbine moveable blades (10T, 10T'), an intermediate body (20) comprising intermediate turbine moveable blades (20T, 20T'), a high-pressure body (30) comprising high-pressure turbine moveable blades (30T), an airflow circulating in the engine, upstream to downstream, engine wherein at least one high-pressure turbine moveable blade (30T) is followed directly downstream by an intermediate turbine moveable blade (20T, 20T') so as to straighten the airflow deviated by the high-pressure turbine moveable blade (30T), **characterised in that** each intermediate turbine moveable blade (20T, 20T') is followed directly downstream by a low-pressure turbine moveable blade (10T, 10T') so as to straighten the airflow deviated by the intermediate turbine moveable blade (20T, 20T').

2. Engine according to claim 1, wherein the low-pressure body (10) and the intermediate body (20) are counter-rotating.

3. Engine according to any of the claims 1 to 2, wherein the high-pressure body (30) and the intermediate body (20) are counter-rotating.

4. Engine according to any of the claims 1 to 3, wherein the low-pressure turbine moveable blade (10T, 10T') extending radially in a given direction, the intermediate turbine moveable blade (20T, 20T') extends radially in the opposite direction.

5. Engine according to any of the claims 1 to 4, wherein at least one low-pressure turbine moveable blade (10T, 10T') is followed directly downstream by another intermediate turbine moveable blade (20T, 20T') so as to straighten the airflow deviated by said low-pressure turbine moveable blade (10T, 10T').

6. Engine according to any of the claims 1 to 5, wherein a plurality of low-pressure turbine moveable blades (10T, 10T') is followed directly downstream by an intermediate turbine moveable blade (20T, 20T') so as to straighten the airflow deviated by the plurality of low-pressure turbine moveable blades (10T, 10T').

7. Engine according to any of the claims 1 to 6, wherein at least one low-pressure turbine moveable blade (10T, 10T') is followed directly downstream by a low-pressure turbine stator blade (11T) so as to straighten the airflow deviated by the low-pressure turbine moveable blade (10T, 10T').
